# EUROPEAN PATENT APPLICATION

(11) **EP 3 561 233 A1**
(43) Date of publication of application: **30.10.2019**
(21) Application number: 18169209.6
(22) Date of filing: 25.04.2018
(51) Int. Cl.: F01D 5/30, F01D 5/18, G01K 11/12

(54) **INTERNALLY COOLED COMPONENT FOR A TURBOMACHINE, CORRESPONDING ROTOR DISC AND METHOD OF MEASURING A TEMPERATURE**

(71) Applicant: Siemens Aktiengesellschaft, 80333 München (DE)
(72) Inventor: Couzens, Mark, Bicker, Boston, PE20 3AZ (GB); Davis, Anthony, Bassingham, Lincoln, LN5 9EY (GB)
(74) Representative: Maier, Daniel Oliver

(57) **Abstract**

An internally-cooled aerofoil component (200) for a turbomachine, the aerofoil component (200) comprising: a root portion (210), a platform (220) carried on the root portion (210), and an aerofoil portion (230) extending from the platform (220); wherein the root portion (210) forms a fluid inlet (212) in flow communication with an internal cooling passage (240) defined within the aerofoil component (200), the fluid inlet (212) configured to receive a cooling flow incident on the root portion (210); wherein a first thermally-sensitive region (250) is disposed on the root portion (210), the first thermally-sensitive region (250) comprising: a thermally-insulating layer (252) carried on the root portion (210); a thermochromic layer (254) carried on the thermally-insulating layer (252).

## Description

The present disclosure relates to an internally-cooled component for a gas turbine and a method of determining the temperature of cooling flow supplied to the internally-cooled component.

### Background

Gas turbine engines, which are a specific example of turbomachines, generally include a rotor with a number of rows of rotating rotor blades which are fixed to a rotor shaft and rows of stationary vanes between the rows of rotor blades which are fixed to the casing of the gas turbine.

When a hot and pressurized working fluid flows through the rows of vanes and blades in the main passage of a gas turbine, it transfers momentum to the rotor blades and thus imparts a rotary motion to the rotor while expanding and cooling. This causes a significant amount of heat to be transferred from the working fluid to the components of the gas turbine. Temperature control is therefore crucial to prevent material failure of the components as result of exceedingly high temperatures. Certain components of the gas turbine, for example the blades and the vanes, may therefore be cooled using a cooling flow through internal cooling passages extending through these components.

In certain known gas turbines the cooling flow is supplied from the compressor. As this cooling flow reaches the internally-cooled components, its temperature will have changed. It is technically challenging, however, to measure the temperature of the cooling flow as it reaches the components. Known means for measuring the temperature of the cooling flow incident on the internally-cooled components include, for example, thermocouples which require electrical cables to be fed via intricate routes to devices outside the engine environment. Setup is therefore time-consuming and costly. Further, added difficulty exists where components carried on a rotating frame are measured, such as blades, which also requires slip-rings to feed signals from the rotating frame.

Hence an internally-cooled component for a turbomachine and a method of determining the temperature of cooling air incident on an internally-cooled component for a gas turbine is highly-desirable.

### Summary

According to the present disclosure there is provided an apparatus and method as set forth in the appended claims. Other features of the invention will be apparent from the dependent claims, and the description which follows.

Accordingly there may be provided an internally-cooled aerofoil component (200) for a turbomachine, the aerofoil component (200) comprising: a root portion (210), a platform (220) carried on the root portion (210), and an aerofoil portion (230) extending from the platform (220); wherein the root portion (210) forms a fluid inlet (212) in flow communication with an internal cooling passage (240) defined within the aerofoil component (200), the fluid inlet (212) configured to receive a cooling flow incident on the root portion (210); wherein a first thermally-sensitive region (250) is disposed on the root portion (210), the first thermally-sensitive region (250) comprising: a thermally-insulating layer (252) carried on the root portion (210); a thermochromic layer (254) carried on the thermally-insulating layer (252). By providing a thermochromic layer on a thermally-insulating layer it is possible to assess the temperature of the cooling flow, as opposed to the temperature of the aerofoil itself. Additionally, the preparation of the aerofoil is convenient, may be performed quickly and does not require adaptation of other components of the gas turbine.

The fluid inlet (212) may comprise a first aperture (212); wherein the first thermally-sensitive region (250) and the first aperture (212) are spaced apart along the root portion (210). By distancing the first thermally-sensitive region from the first aperture a cooling effect by virtue of the velocity of the cooling flow may be prevented or reduced where the root portion is configured to receive a cooling flow incident on the first aperture.

The fluid inlet (212) may comprise: a second aperture (216), and a bridge (218) extending between the first aperture (214) and the second aperture (216); wherein the first thermally-sensitive region (250) is disposed on the bridge (218).

The aerofoil component (200) may define a leading end (212) and a trailing end (214), the leading end (212) and the trailing end (214) longitudinally spaced apart; and the aerofoil component (200) comprising a second thermally-sensitive region (260) disposed between the bridge (218) and the trailing end (214) of the aerofoil component (200). Providing a second thermally-sensitive region may allow assessing a temperature gradient of the cooling flow along the root portion

The thermochromic layer (254, 264) may be a single-change thermochromic layer configured to: have a first colour below a threshold temperature, and exhibit an irreversible colour change to a second colour at or above a threshold temperature, the second colour being different from the first colour. A single-change layer may possess an improved sensitivity to provide for a more accurate temperature measurement.

The thermochromic layer (254, 264) may be a multi-change thermochromic layer configured to: have a first colour below a first threshold, and exhibit a first irreversible colour change to a second colour at or above a first threshold temperature, the second colour being different from the first colour, and exhibit a second irreversible colour change to a third colour at or above a second threshold temperature, the third colour being different from both the first colour and the second colour. A multi-change layer may improve identifying a temperature range with the cooling flow is supplied.

The thermally-insulating layer (252) may have a first thickness and the thermochromic layer (254) may have a second thickness, wherein the first thickness is greater than the second thickness. By providing a thermally-insulating layer which is thicker than the thermochromic layer, the thermochromic layer may more accurately respond to the temperature of the cooling flow as opposed to the temperature of the underlying root portion.

The thermally insulating layer (252) may have a thickness between 0.3mm and 1.5mm, and the thermochromic layer (254) may have a thickness between 0.01mm and 0.05mm. Providing a thermally-insulating layer having a thickness of 0.3mm or more may be sufficient to ensure adequate thermal insulation, while providing a layer having a thickness of 1.5mm or less may keep disturbance of the cooling flow minimal.

The thermochromic layer (254) may be sensitive to a temperature between 250°C and 750°C, which may correspond to a temperature range expected in a gas turbine.

The root portion (210), the platform (220) and the aerofoil portion (230) may be made from a metal alloy.

There may be provided a rotor disc comprising a plurality of aerofoils (200), wherein at least two aerofoils (200) as described above: the first aerofoil component (200) comprises a multi-change thermochromic layer (254, 264) as described earlier; and the second aerofoil component (200) comprises a single-change thermochromic layer (254, 264) as described earlier. By providing multiple aerofoils prepared with thermochromic layers the accuracy of the temperature measurement may be improved. By providing both single-change and multi-change thermochromic layers, the accuracy may be improved further.

There may be provided a method of measuring the temperature of cooling flow incident on an aerofoil component (200) inside a turbomachine, the method comprising: providing an aerofoil component (200) as described earlier; assembling the turbomachine to include the aerofoil component (200); operating the turbomachine; disassembling the turbomachine; inspecting the root portion (210) of the aerofoil component (200) to assess a colour change exhibited by the thermally-sensitive region (250). By providing a thermochromic layer on a thermally-insulating layer it is possible to assess the temperature of the cooling flow, as opposed to the temperature of the aerofoil itself. Additionally, the preparation of the aerofoil is convenient, may be performed quickly and does not require adaptation of other components of the gas turbine.

Operating the turbomachine may comprise maintaining an engine condition for at least 10 minutes, whereby it may be ensured that the operating temperature at said engine condition, or more particularly the peak temperature of the cooling flow, has been reached.

Inspecting the root portion (210) may comprise assessing the spectral properties of the thermochromic layer (254).

The method may further comprise comparing the spectral properties of the thermochromic layer (254) of the aerofoil component (200) to the spectral properties of a control aerofoil component (200), by: providing another aerofoil component (200) as described earlier, exposing the other aerofoil component (200) to an airflow at a controlled temperature, thus calibrating the other aerofoil component (200) to define the control aerofoil component (200); assessing the spectral properties of the thermochromic layer (254) of the control aerofoil component (200). By comparing the aerofoil component to a control aerofoil component it may be possible to obtain more accurate measurement results using a straightforward assessment.

### Brief Description of the Drawings

Examples of the present disclosure will now be described with reference to the accompanying drawings, in which:
Figure 1 shows a schematic representation of an example of a turbomachine;
Figure 2 shows an enlarged region of a section of a turbine of the turbomachine shown in Figure 1;
Figure 3 shows an end view of the rotor blades shown in Figures 1 and 2;
Figure 4 is a perspective view of an aerofoil according to the present disclosure;
Figure 5 is a perspective view of an underside of the aerofoil shown in Figure 4;
Figure 6 is a schematic partial cross-sectional view of the aerofoil shown in Figure 4; and
Figure 7 illustrates a method according to the present disclosure.

### Detailed Description

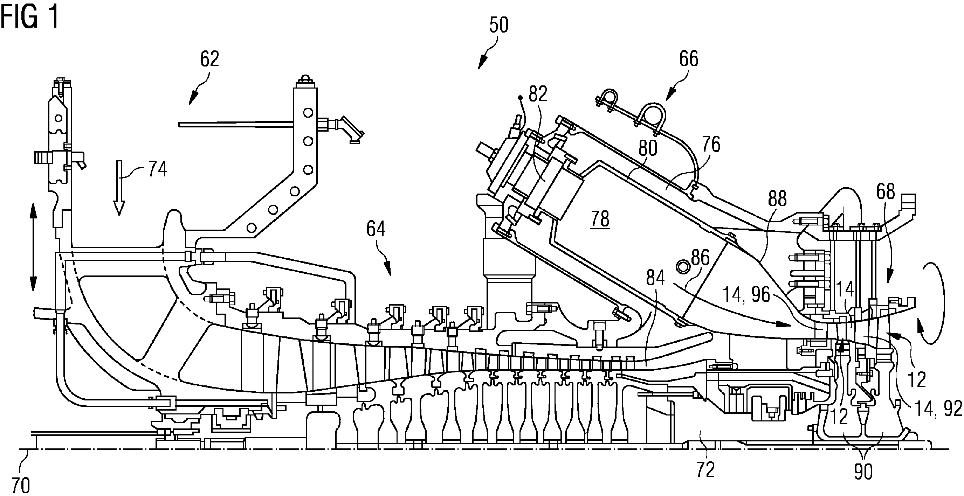

By way of context, Figures 1 to 3 show known arrangements, described for contrast with examples of the present invention, and to which the features of the present invention may be applied.

Figure 1 shows an example of a gas turbine engine 50 in a sectional view, which illustrates the nature of rotor blades and the environment in which they operate. The gas turbine engine 50 comprises, in flow series, an inlet 62, a compressor section 64, a combustion section 66 and a turbine section 68, which are generally arranged in flow series and generally in the direction of a longitudinal or rotational axis 70. The gas turbine engine 50 further comprises a shaft 72 which is rotatable about the rotational axis 70 and which extends longitudinally through the gas turbine engine 50.

The rotational axis 70 is normally the rotational axis of an associated gas turbine engine. Hence any reference to "axial", "radial" and "circumferential" directions are with respect to the rotational axis 70.

The shaft 72 drivingly connects the turbine section 68 to the compressor section 64. In operation of the gas turbine engine 50, air 74, which is taken in through the air inlet 62 is compressed by the compressor section 64 and delivered to the combustion section or burner section 66. The burner section 66 comprises a burner plenum 76, one or more combustion chambers 78 defined by a double wall can 80 and at least one burner 82 fixed to each combustion chamber 78. The combustion chambers 78 and the burners 82 are located inside the burner plenum 76. The compressed air passing through the compressor section 64 enters a diffuser 84 and is discharged from the diffuser 84 into the burner plenum 76 from where a portion of the air enters the burner 82 and is mixed with a gaseous or liquid fuel. The air/fuel mixture is then burned and the combustion gas 86 or working gas from the combustion is channelled via a transition duct 88 to the turbine section 68.

The turbine section 68 may comprise a number of blade carrying rotor discs 90 or turbine wheels attached to the shaft 72. In the example shown, the turbine section 68 comprises two discs 90 which each carry an annular array of turbine assemblies 12, which each comprises an aerofoil 14 embodied as a turbine blade 100. Turbine cascades 92 are disposed between the turbine blades 100. Each turbine cascade 92 carries an annular array of turbine assemblies 12, which each comprises an aerofoil 14 in the form of guiding vanes (i.e. stator vanes 96), which are fixed to a stator 94 of the gas turbine engine 50.

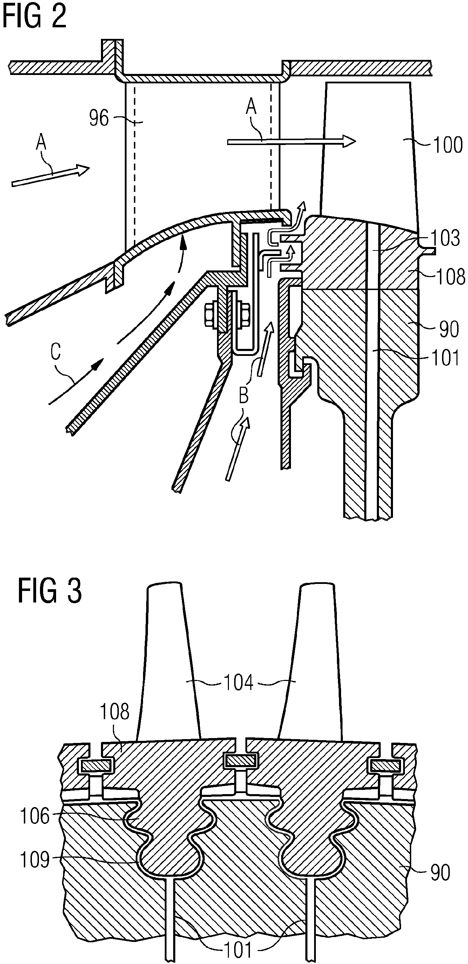

Figure 2 shows an enlarged view of a stator vane 96 and rotor blade 100, which are particular examples of components of the gas turbine engine 50. Arrows "A" indicate the direction of flow of combustion gas 86 past the aerofoils 96,100 along a main (i.e. core) flow passage. Arrows "B" show cavity purge air flow passages provided for sealing. Arrows "C" indicate cooling air flow paths for passing through the stator vanes 96. Arrows "P" indicate cavity cooling air purge flow upstream of the stator vane 96. Cooling flow passages 101 may be provided in the rotor disc 90 which extend radially outwards to feed an air flow passage 103 in the rotor blade 100.

The combustion gas 86 from the combustion chamber 78 enters the turbine section 68 and drives the turbine blades 100 which in turn rotate the shaft 72 to drive the compressor. The guiding vanes 96 serve to optimise the angle of the combustion or working gas 86 on to the turbine blades.

Figure 3 shows a view of the rotor blades 100 looking upstream, facing the flow "A" shown in Figure 2.

Each rotor blade 100 comprises an aerofoil portion 104, a root portion 106 and a platform 108. The platform 108 is located between the aerofoil portion 104 and the root portion 106. The rotor blades 100 are fixed to the rotor disc 102 by means of their root portions 106. The root portions 106 have a shape that corresponds to notches (or grooves) 109 in the rotor disc 90, and are configured to prevent the rotor blade 100 from detaching from the rotor disc 102 in a radial direction as the rotor disc 102 spins.

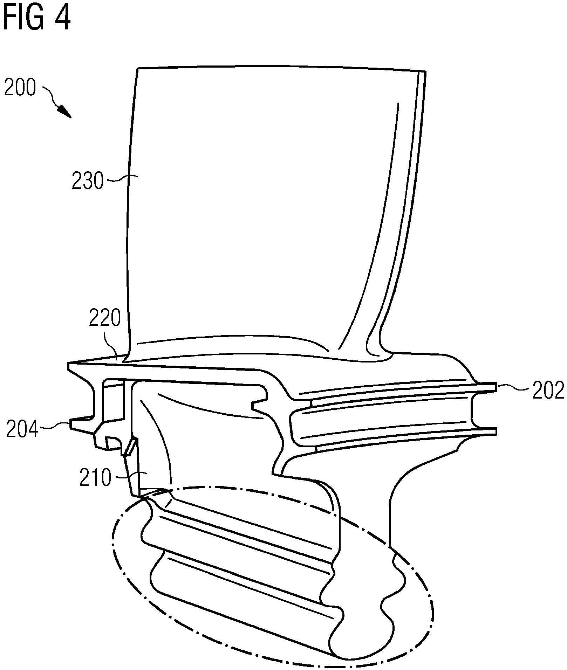

Figure 4 is a perspective view of an aerofoil component 200 according to the present disclosure.

The aerofoil component 200 (or simply 'aerofoil 200') shares features with known aerofoils, for example rotor blades 100 as described above, which are therefore not described in detail. In particular, the aerofoil component 200 comprises a leading end 202 longitudinally spaced apart from a trailing end 204, thus defining a longitudinal direction of the aerofoil component 200. That is, the leading end 202 is an upstream region of the aerofoil component 200, while the trailing end 204 is a downstream region of the aerofoil component 200. The leading end 202 and the trailing end 204 delimit (or 'bound') the aerofoil component 200, i.e. they are physical ends of the aerofoil component 200. With respect to the gas turbine, the leading end 202 and the trailing end 204 delimit the aerofoil component 200 along the axial direction.

The aerofoil component 200 comprises a root portion 210, a platform 220 carried on, or extending from, the root portion 210, and an aerofoil portion 230 extending from the platform 220. According to the present example, the root portion 210, the platform 220 and the aerofoil portion 230 are made from a metal alloy. A suitable choice of metal alloy may include, for example, a high-performance alloy as known to be used for applications relating to gas turbines.

In a gas turbine, the platform 210 provides an inner boundary of the annular main passage, defined by the compressor, combustor and turbine as shown in Figure 1, through which working fluid flows. With respect to the gas turbine, the aerofoil portion 230 extends from the platform 220 along the radial direction.

In a gas turbine the root portion 210 is received, for example, in the rotor disc 90 (as shown in Figure 3) or in a stator disc. The root portion 210 is configured to prevent the aerofoil component 200 from detaching from the disc, for instance in a radial direction as the rotor disc 90 spins.

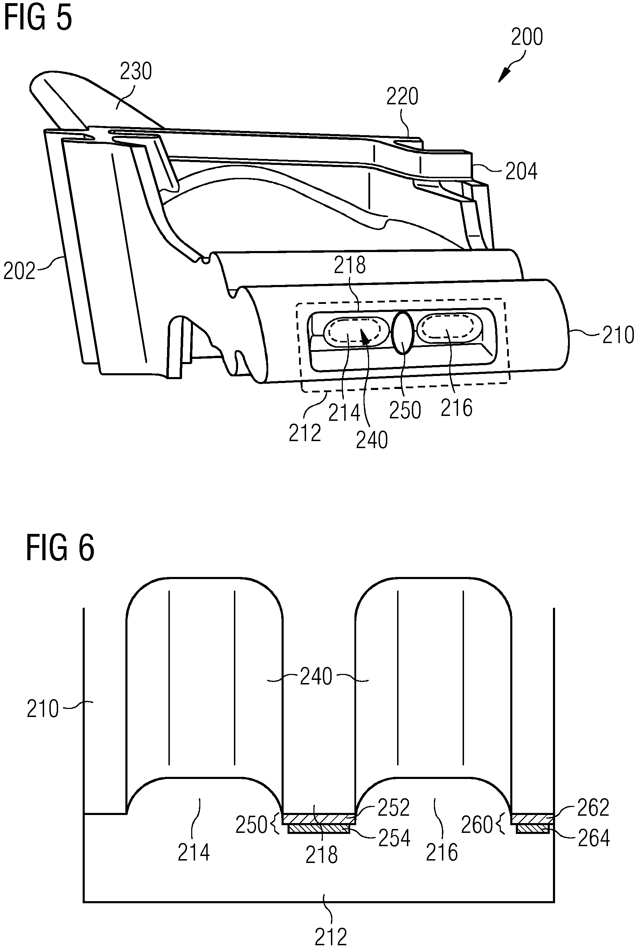

Figures 5 and 6 show a perspective view and a schematic partial cross-sectional view of the aerofoil component 200, respectively. In particular, Figure 5 shows an underside of the aerofoil component 200, while Figure 6 shows a partial cross-section through the root portion 210.

The aerofoil component 200 comprises an internal cooling passage 240 to provide cooling to the aerofoil component 200. That is to say, the aerofoil component 200 is 'internally cooled'. The cooling passage 240 extends between a fluid inlet 212 and a fluid outlet. The fluid outlet may be provided at any suitable location, for example the trailing end 204 of the aerofoil portion 230. The root portion 210 defines the fluid inlet 212, which corresponds to a point of entry of the cooling flow.

The fluid inlet 212 is in flow communication with the cooling passage 240 so that a cooling flow incident on the root portion 210 is communicated through the cooling passage 240.

A first thermally-sensitive region 250 (or 'TS region 250') is disposed on the root portion 210 to measure the temperature of the cooling flow supplied to the aerofoil portion 200. That is to say, the thermally-sensitive region 250 is configured to record the temperature of the cooling flow to which the aerofoil component 200, and in particular the root portion 210, is exposed.

The first thermally-sensitive region 250 comprises a first thermally-insulating layer 252 (or 'TI layer 252') and a first thermochromic layer 254 (or 'TC layer 254').

The TC layer 254 is configured to change its colour from a first colour to a second colour in response to the cooling flow temperature exceeding a threshold temperature. It is therefore alternatively referred to as a 'temperature-indicating layer'. The colour transition of the TC layer 254 is irreversible and, hence, suitable to permanently record whether the cooling flow did exceed the threshold temperature. Here irreversible is understood to describe a colour change which happens as the threshold temperature is exceeded but is not reversed following subsequently cooling below the threshold temperature.

In order to ensure that the TC layer 254 records the temperature of the cooling flow, the TC layer 254 is carried on, i.e. bonded to, the TI layer 252. The TI layer 252 is configured to inhibit heat transfer between the root portion 210 and the TC layer 254. The TI layer 252 therefore prevents the TC layer 254 from recording the temperature of the underlying substrate of the aerofoil component 200. Suitably, the TI layer 252 is disposed between the root portion 210 and the TC layer 254. That is to say, the TI layer 252 is carried on the root portion 210, while the TC layer 254 is carried on the TI layer 252.

According to the present example, the fluid inlet 212 comprises a first aperture 214 and a second aperture 216. The first aperture 214 is located towards the leading end 202 of the aerofoil component 200, whereas the second aperture 216 is located towards the trailing end 204 of the aerofoil component 200. The first aperture 214 and the second aperture 216 are separated by a bridge 218 formed therebetween, i.e. a portion of the root portion extending between the first aperture 214 and the second aperture 216.

The cooling flow is configured to be directly incident on the first aperture 214. That is to say, the cooling flow is directed (or 'focused') into the first aperture 214 of the fluid inlet 212. The cooling flow is therefore fastest in the immediate vicinity of the first aperture 214. The cooling flow moving quickly causes a cooling effect which may lead to inaccurate recording of the cooling flow temperature. Accordingly, the TS region 250 is spaced apart from the first aperture 214 so that a cooling effect on the TS region 250 is reduced or prevented. According to the present example, the TS region 250 is disposed on the bridge 218.

A second thermally-sensitive region 260 is disposed between the bridge 218 and the trailing end 204 of the aerofoil component 200. The second TS region 260 is composed of a second thermally-insulating layer 262 carried on the root portion 210, and a second thermochromic layer 264 carried on the second TI layer 262. The second thermally-sensitive region 260 is also configured to record whether the temperature of the cooling flow exceeds a threshold temperature. According to the present example, the threshold temperature of the second TS region 260 corresponds to the threshold temperature of the first TS region 250.

The TS region 250, 260 may have a thickness between approximately 0.3mm (millimetres) and 1.5mm. A thickness much greater than 1.5mm may affect the cooling flow, and thus impair the measurement results, while a thickness below 0.3mm may not be sufficient for an accurate reading.

The TI layer 252 of the TS region 250, 260 may be a suitable choice of thermal insulator such as, for example, ceramic paint. According to the present example, a ceramic layer is applied to the root portion 210 to serve as the TI layer 252. Depending on the particular application, the TI layer 252 may have a thickness between 0.3mm and 1.5mm.

The TC layer 254, 264 may have a thickness of between 0.01mm and 0.05mm. According to the present example, the TC layer has a thickness of approximately 0.02mm. The TC layer 254, 264 may be any suitable choice of material configured to exhibit a colour transition in response to a temperature transition. For example, the thermochromic layer 254, 264 may be a layer of a suitable choice of thermochromic paint, as is known and readily available.

According to present example, a single-change thermochromic layer may be applied to a first aerofoil component 200, while a multi-change thermochromic layer may be applied to a different region of the first aerofoil component 200 or a second aerofoil component 200.

The single-change thermochromic layer is configured to have a first colour below a threshold temperature, and exhibits an irreversible colour change to a second colour at or above the threshold temperature, where the second colour is different from the first colour. The threshold temperature may be within the range of 250°C (degrees Celsius) and 750°C. According to some examples, the range is 400°C and 700°C.

The multi-change thermochromic layer is configured to have a first colour below a first threshold temperature, and exhibits a first irreversible colour change to a second colour at or above the first threshold temperature, where the second colour is different from the first colour. Additionally, the multi-change thermochromic layer is configured to exhibit a second irreversible colour change to a third colour at or above a second threshold temperature, where the third is different from both the first colour and the second colour. Suitably, the first and the second threshold temperatures lie within the range of 250°C and 750°C, and the second threshold temperature is higher than the first threshold temperature.

Prior to assembly of the gas turbine, one or multiple aerofoils 200 are provided with at least one TS region 250, 260 to record the cooling flow temperature.

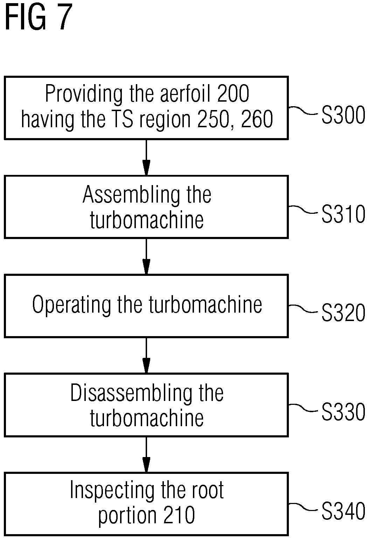

Figure 7 illustrates a method of measuring the temperature of cooling flow incident on the aerofoil component 200 inside a gas turbine.

The method comprises providing one or multiple aerofoils 200 as described above (S300). The method further comprises assembling the gas turbine, including the one or multiple aerofoils 200 (S310).

Once fully assembled with one or multiple aerofoils 200 prepared with TS regions 250, 260, the gas turbine is operated (S320). According to the present example, a specific engine condition is maintained for at least 10 minutes to allow for the temperatures to reach their peak values. Assessing of the cooling air temperature under a different engine condition is preferably done using a freshly prepared set of aerofoils 200.

After operating the gas turbine for a sufficient period of time to ensure that accurate temperature readings are recorded by the TS regions 250, 260, operation is terminated and the gas turbine disassembled (S330). By inspecting the root portion of the one or multiple aerofoils 200 prepared with TS regions 250, 260, it is possible to assess the temperature reached by the cooling flow as it reaches the aerofoil component 200 (S340). In particular, it is possible to assess whether a particular threshold temperature has been reached or exceeded.

Inspection of the TS layer 250, 260 comprises spectral analysis, i.e. determination of the shade or wavelength of the colour, of the TS layer 250, 260. Such inspection can be done by eye or using optical instruments, such as a camera or a spectrograph.

According to the present example, the one or multiple aerofoils 200 are illuminated using a particular type of light and assessed using a suitable optical instrument. The spectroscopic or spectral properties are recorded and compared to the spectroscopic properties of a control aerofoil component 200 (or 'test piece').

The calibrated test piece is another aerofoil component 200, prepared to be substantially identical to the one or multiple aerofoils 200 used in the gas turbine. However, the calibrated test piece is exposed to an airflow at a controlled temperature. Preferably, the airflow is not only at a controlled temperature but additionally provided at the same pressure and/or incident on the same location.

In response to the airflow, any TS layer 250, 260 on the test piece may or may not exhibit a colour transition. The calibrated test piece is then assessed using the same process as the aerofoils 200 removed from the gas turbine. That is to say, the test piece is illuminated using the same particular type of light and assessed using the same optical instrument. By comparing the spectral properties of the calibrated test piece with the spectral properties of the aerofoils 200 taken from the gas turbine, an accurate assessment of the cooling flow temperature within the gas turbine may be possible. Particularly where the TS layers 250, 260 exhibit subtle or complex colour transition, comparison with a calibrated test piece may yield more accurate results than just an analysis of the aerofoils 200 from the gas turbine.

Using multiple aerofoils 200 may lead to more accurate results and allows using different types of TC layers 254, 264, such as single-change and multi-change.

Using multiple TS regions 250, 260 on a single aerofoil may allow measuring of temperature gradients along the aerofoil component 200. Particularly where a relatively focused cooling flow is incident on the aerofoil component 200, a significant temperature gradient may be generated. In some examples, the size of TS regions 250, 260 or the number of TS regions 250, 260 may be chosen so that a heat map is recorded on the aerofoil component 200.

According to the above example, the aerofoil component 200 is formed as a single unit, which is then assembled with other substantially identical aerofoils 200. Alternatively, a plurality of substantially identical aerofoils 200 is formed integrally. Hence each aerofoil may be considered as a sub-unit of a larger component, each sub unit comprising a region corresponding to a pressure-side edge/end of the platform and a suction-side edge/end of the platform on either side of their respective aerofoil portion, even if the side edges are not physically present because they are integrally formed with the side edges of adjacent sub-units. That is to say, the pressure-side end and a suction-side end may not correspond to physical boundaries of the component, although they may define a boundary (i.e. limit) between repeated sub-units of the component design.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An internally-cooled aerofoil component (200) for a turbomachine, the aerofoil component (200) comprising:
a root portion (210),
a platform (220) carried on the root portion (210), and
an aerofoil portion (230) extending from the platform (220);
wherein the root portion (210) forms a fluid inlet (212) in flow communication with an internal cooling passage (240) defined within the aerofoil component (200), the fluid inlet (212) configured to receive a cooling flow incident on the root portion (210);
wherein a first thermally-sensitive region (250) is disposed on the root portion (210), the first thermally-sensitive region (250) comprising:
a thermally-insulating layer (252) carried on the root portion (210);
a thermochromic layer (254) carried on the thermally-insulating layer (252).

2. The aerofoil according to claim 1,
the fluid inlet (212) comprising a first aperture (212);
wherein the first thermally-sensitive region (250) and the first aperture (212) are spaced apart along the root portion (210).

3. The aerofoil component (200) according to claim 2,
the fluid inlet (212) comprising:
a second aperture (216), and
a bridge (218) extending between the first aperture (214) and the second aperture (216);
wherein the first thermally-sensitive region (250) is disposed on the bridge (218).

4. The aerofoil component (200) according to claim 3,
the aerofoil component (200) defining a leading end (212) and a trailing end (214), the leading end (212) and the trailing end (214) longitudinally spaced apart; and
the aerofoil component (200) comprising a second thermally-sensitive region (260) disposed between the bridge (218) and the trailing end (214) of the aerofoil component (200).

5. The aerofoil component (200) according to any previous claim, wherein the thermochromic layer (254) is a single-change thermochromic layer configured to:
have a first colour below a threshold temperature, and
exhibit an irreversible colour change to a second colour at or above a threshold temperature, the second colour being different from the first colour.

6. The aerofoil component (200) according to any one of claims 1 to 4, wherein the thermochromic layer (254) is a multi-change thermochromic layer configured to:
have a first colour below a first threshold, and
exhibit a first irreversible colour change to a second colour at or above a first threshold temperature, the second colour being different from the first colour, and
exhibit a second irreversible colour change to a third colour at or above a second threshold temperature, the third colour being different from both the first colour and the second colour.

7. The aerofoil component (200) according to any previous claim, wherein the thermally-insulating layer (252) has a first thickness and the thermochromic layer (254) has a second thickness, and wherein the first thickness is greater than the second thickness.

8. The aerofoil component (200) according to claim 7,
the thermally insulating layer (252) has a thickness between 0.3mm and 1.5mm, and
the thermochromic layer (254) has a thickness between 0.01mm and 0.05mm.

9. The aerofoil component (200) according to any previous claim, wherein the thermochromic layer (254) is sensitive to a temperature between 250°C and 750°C.

10. The aerofoil component (200) according to any previous claim, wherein the root portion (210), the platform (220) and the aerofoil portion (230) are made from a metal alloy.

11. A rotor disc comprising a plurality of aerofoils (200), wherein at least two aerofoils (200) are according to any one of claims 1 to 10:
the first aerofoil component (200) comprises a multi-change thermochromic layer (254, 264) according to claim 6; and
the second aerofoil component (200) comprises a single-change thermochromic layer (254, 264) according to claim 5.

12. A method of measuring the temperature of cooling flow incident on an aerofoil component (200) inside a turbomachine, the method comprising:
providing an aerofoil component (200) according to any one of claims 1 to 9;
assembling the turbomachine to include the aerofoil component (200);
operating the turbomachine;
disassembling the turbomachine;
inspecting the root portion (210) of the aerofoil component (200) to assess a colour change exhibited by the thermally-sensitive region (250).

13. The method according to claim 12, wherein operating the turbomachine comprises maintaining an engine condition for at least 10 minutes.

14. The method according to claim 12 or 13, wherein inspecting the root portion (210) comprises assessing the spectral properties of the thermochromic layer (254).

15. The method according to claim 14, further comprising:
comparing the spectral properties of the thermochromic layer (254) of the aerofoil component (200) to the spectral properties of a control aerofoil component (200), by:
providing another aerofoil component (200) according to any one of claims 1 to 10,
exposing the other aerofoil component (200) to an airflow at a controlled temperature, thus calibrating the other aerofoil component (200) to define the control aerofoil component (200);
assessing the spectral properties of the thermochromic layer (254) of the control aerofoil component (200).
